# EUROPEAN PATENT SPECIFICATION

(11) **EP 0 980 770 B1**
(45) Date of publication and mention of the grant of the patent: **08.12.2004**
(21) Application number: 99306491.4
(22) Date of filing: 17.08.1999
(51) Int. Cl.: B60C 9/22, B60C 9/20

(54) **Pneumatic radial tires**
Radiale Luftreifen
Bandages pneumatiques radiaux

(30) Priority: 19.08.1998 JP 23268398; 11.11.1998 JP 32047298; 28.07.1999 JP 21334499
(43) Date of publication of application: 23.02.2000
(60) Divisional application: 04020973.6
(73) Proprietor: Bridgestone Corporation, Tokyo (JP)
(72) Inventor: Tsuruta, Makoto, Kodaira City, Tokyo (JP); Yamada, Atsushi, Kodaira City, Tokyo (JP)
(74) Representative: Whalley, Kevin

(56) References cited:
- EP-A- 0 384 558
- EP-A- 0 511 797
- EP-A- 0 573 237
- WO-A-99/24270
- FR-A- 2 566 334
- GB-A- 2 072 590
- PATENT ABSTRACTS OF JAPAN vol. 018, no. 274 (M-1611), 25 May 1994 (1994-05-25) -& JP 06 048112 A (BRIDGESTONE CORP), 22 February 1994 (1994-02-22)
- PATENT ABSTRACTS OF JAPAN vol. 1995, no. 03, 28 April 1995 (1995-04-28) -& JP 06 344721 A (BRIDGESTONE CORP), 20 December 1994 (1994-12-20)
- PATENT ABSTRACTS OF JAPAN vol. 014, no. 379 (M-1012), 16 August 1990 (1990-08-16) -& JP 02 141306 A (BRIDGESTONE CORP), 30 May 1990 (1990-05-30)

## Description

This invention relates to a pneumatic radial tire comprising a belt comprised of at least two belt layers and a belt reinforcing layer for the belt embedded therein with a reinforcing element extending in a circumferential direction.

It is known that profile flattening of a tire proceeds with the lowering of a floor in a vehicle. As the tire becomes flattened, the outward growth of tire size in a tread portion in a radial direction becomes larger upon inflation under an internal pressure and hence separation failure is easily caused at an end of a belt to lower the tire durability.

In order to solve this problem, there has been proposed a pneumatic tire as described in JP-A-2-208101 corresponding to the preamble of claim 1. This tire comprises a radial carcass toroidally extending between a pair of bead portions, a belt disposed at an outside of the radial carcass in a radial direction of the tire and comprised of at least two belt layers each containing many reinforcing cords embedded therein, the cords of which layers are crossed with each other with respect to an equatorial plane of the tire, a belt reinforcing member disposed at an inside of the belt in the radial direction and comprised of at least one ply having a width narrower than that of the belt and containing plural reinforcing elements embedded therein so as to extend in a circumferential direction of the tire while bending in wave or zigzag form, and a tread rubber arranged at an outside of the belt in the radial direction.

In such a pneumatic tire, the belt reinforcing member controls the outward growth of tire size of a tread portion, particularly a shoulder portion in the radial direction during the inflation of an internal air pressure to a certain extent, whereby separation failure at a widthwise outer end portion of the belt is controlled to improve the belt durability.

However, the growth of the tire diameter in the tread portion increases with the flattening of the tire, so that the width of the belt reinforcing member should be made wide in accordance of the flattening degree (i.e. aspect ratio) of the tire. In this connection, when the width of the belt reinforcing member in the above pneumatic tire is further widened in accordance with the greater flattening of the tire recently demanded (aspect ratio of not more than 0.7), there is caused a problem that the occurrence of belt end separation can not sufficiently be suppressed and particularly separation failure is created at the widthwise outer end portion of the belt reinforcing member.

The present inventors have made various studies with respect to the separation failure of the belt in the above pneumatic tire provided with the belt reinforcing member and have obtained the following knowledge. That is, when the tire rides on protrusions such as stones and the like scattered on a road surface at a middle region between the equatorial plane and the tread end during the running of the tire, the belt reinforcing member is pushed inward in the radial direction to form a dent portion. The degree of this dent portion is sharper in the widthwise direction than in the circumferential direction. For this end, when the tire rides over the protrusion, a large axial shearing strain is caused between the belt layers constituting the belt, and particularly the largest axial shearing strain is caused at an end of the belt layer, which brings about the occurrence of the belt end separation as mentioned above.

The inventors have made analyses with respect to the deformation of the belt as mentioned above and confirmed two causes as mentioned below. Firstly, the reinforcing elements of the belt layers constituting the belt are crossed at a small inclination angle with respect to the equatorial plane of the tire, usually within a range of 15-30° for effectively controlling the growth of tire diameter in the tread portion, while the reinforcing elements embedded in the belt reinforcing member extend in parallel to the equatorial plane of the tire as a whole as mentioned above, so that the bending rigidity of the belt and the belt reinforcing member in the widthwise direction of the tire as a whole is fairly low. Secondly, the belt reinforcing member bears a greater part of circumferential tension produced in the tire in the inflation under internal air pressure because the reinforcing elements embedded in the belt reinforcing member extend in parallel to the equatorial plane, so that the rigidity rapidly lowers at an outer end of the belt reinforcing member in the axial direction, and hence when the belt reinforcing member is subjected to a force from the protrusion as mentioned above, it acts as a single deformable plate and concavely deforms at the axially outer end as a fulcrum (or fixed point).

Furthermore, the inventors have confirmed the following. That is, since the belt in a ground contact region is deformed so as to be flat and the reinforcing elements contained therein are inclined toward the side of the equatorial plane so as to extend in the circumferential direction, rubber surrounding the belt is dragged in the circumferential direction by such a deformation of the belt and also the dragged quantity of rubber becomes large near to the widthwise outer end of the belt. In the above tire, since the belt reinforcing member having a width narrower than that of the belt is arranged adjacent to the belt, rubber located near to the widthwise outer end of the belt reinforcing member is also dragged by the widthwise outer end portion of the belt and largely deformed. However, even if the belt reinforcing member is deformed so as to be flat together with the belt, the reinforcing elements in the belt reinforcing member extend in the circumferential direction, and they are not further stretched in the circumferential direction and hence a great strain is produced in rubber near to the widthwise outer end of the belt reinforcing member, and also such a strain is repeatedly caused every rotation of the tire. As a result, separation failure is prematurely caused in the vicinity of the widthwise outer end of the belt reinforcing member.

The inventors have made further studies based on the above knowledge and found that the occurrence of separation failure can be controlled by arranging a belt protection member satisfying a given condition in addition to the belt reinforcing member, or by specifying a relation between widthwise outer ends of the belt and the belt reinforcing member.

According to the invention, there is provided a pneumatic radial tire comprising the features of claim 1.

Thus, when the widthwise outer end of a belt reinforcing layer having a widest width among the belt reinforcing layers is located outward from the widthwise outer end of a belt layer having a widest width in a widthwise direction of the tire, rubber in the vicinity of the widthwise outer end portion of the widest-width belt reinforcing layer is separated away from the widthwise outer end of the widest-width belt layer largely deforming in the circumferential direction, so that it is not affected by such a deformation and hence separation failure in the vicinity of the widthwise outer end of the widest-width belt reinforcing layer can effectively be prevented. In this case, the belt reinforcing member may be arranged inward or outward from the belt in the radial direction or between the belt layers constituting the belt.

In a preferable embodiment of the invention, when a maximum width of the carcass is L, the widthwise outer end of the widest-width belt reinforcing layer is located between a point P separated outward from the equatorial plane S by 0.375 times of L in the widthwise direction and a point Q separated outward from the equatorial plane S by 0.45 times of L in the widthwise direction. In this case, the outward growth of tire size in the tread portion can effectively be controlled and the distribution thereof can be made uniform while preventing separation failure in the widthwise outer end of the widest-width belt reinforcing layer.

In another preferable embodiment of the invention, when the width of the widest-width belt layer is N, the widthwise outer end of the widest-width belt reinforcing layer is located outward from a point U separated by 0.05 times of N from the widthwise outer end of the widest-width belt layer in the widthwise direction. In this case, the deformation of the widest-width belt layer in the circumferential direction is hardly caused in the vicinity of the widthwise outer end of the widest-width belt reinforcing layer and hence separation failure in such a widthwise outer end is more controlled.

The invention will be further described with reference to the accompanying drawings, wherein:
Fig. 1 is a diagrammatic radial-half section view of an embodiment of the pneumatic tire according to the invention; and
Fig. 2 is a partial developed view illustrating a lamination structure of carcass and belt in the pneumatic tire of Fig. 1.

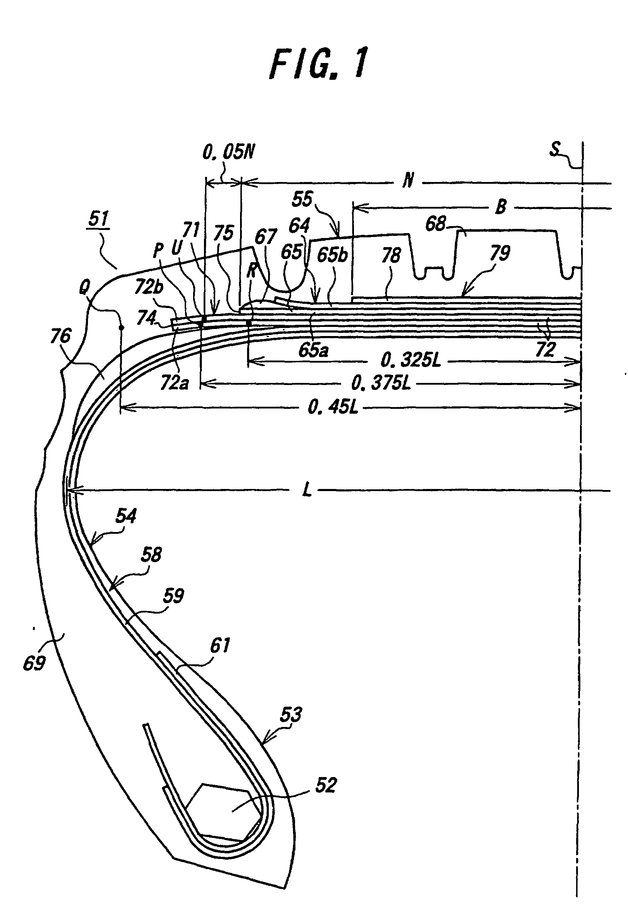

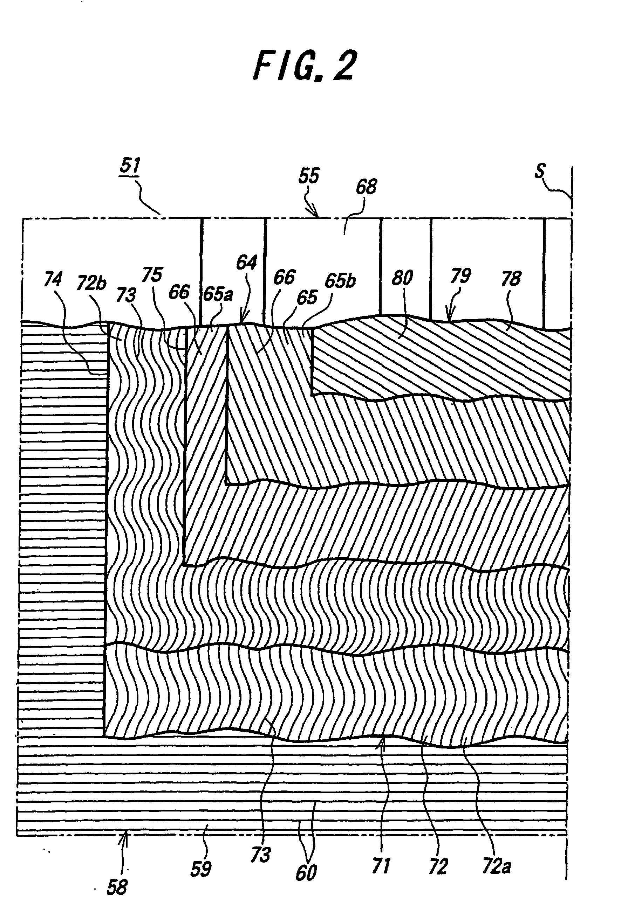

In Figs. 1 and 2, numeral 51 is a heavy duty pneumatic radial tire for trucks and buses having an aspect ratio of not more than 0.70, preferably not more than 0.60. This tire 51 comprises a pair of bead portions 53 each embedding an annular bead core 52 therein, a pair of sidewall portions 54 each extending outward from each bead portion 53 in an approximately radial direction, and a tread portion 55 connecting radial outer ends of the sidewall portions 54 to each other. The tire 51 also comprises a carcass 58 toroidally extending between the pair of bead cores 52 and reinforcing the sidewall portions 54 and the tread portion 55 and both end portions of the carcass 58 are wound around the bead cores 52 from the inside of the tire toward the outside thereof, respectively. The carcass 58 is comprised of at least one carcass ply 59 (one ply in the illustrated embodiment). In the carcass ply 59 are embedded many inextensible cords 60 such as steel cords extending substantially in the radial direction (meridional direction) of the tire. Also, a chafer 61 reinforced with, for. example, steel cords is arranged about the carcass 58 in the bead portion 53.

Numeral 64 is a belt disposed at the outside of the carcass 58 in the radial direction and comprised of at least two belt layers 65 (two belt layers in the illustrated embodiment). In each of the belt layers 65 are embedded many inextensible cords 66 such as steel cords or aramid fiber cords. The cords 66 embedded in the belt layers 65 are inclined at an angle of 10-70°, with respect to the equatorial plane S, wherein the inclining directions of the cords in at least two belt layers 65 are opposite to each other. In this case, the inner belt layer 65a located inward in the radial direction has a width wider than that of the outer belt layer 65b located outward in the radial direction. That is, the inner belt layer 65a is a widest-width belt layer and the outer belt layer 65b is a narrow-width belt layer in the illustrated embodiment. Furthermore, a cushion rubber 67 is interposed between widthwise outer end portions of the widest-width belt layer 65a and the narrow-width belt layer 65b so as to mitigate strain therebetween.

Numeral 68 is a tread rubber disposed at the outsides of the carcass 58 and the belt 64 in the radial direction, and numeral 69 is a side rubber arranged at the outside of the carcass 58.

Numeral 71 is a belt reinforcing member disposed at the inside of the belt 64 and at the outside of the carcass 58 in the radial direction,or interposed between the carcass 58 and the belt 64 and comprised of at least one belt reinforcing layer 72 (two belt reinforcing layers in the illustrated embodiment). In each of the belt reinforcing layers 72 is embedded a reinforcing element 73 extending substantially in the circumferential direction and made of an inextensible material such as steel cord, aramid fiber cord or monofilament thereof, wherein many reinforcing elements are existent in a meridional section of each belt reinforcing layer 72. The reinforcing element 73 is bent in a wavy form having substantially the same phase such as sine curve, square curve, chopping wave or zigzag in a plane parallel to front and rear surfaces of the belt reinforcing layer 72. In the illustrated embodiment, the inner belt reinforcing layer 72a located inward in the radial direction and the outer belt reinforcing layer 72b located outward adjacent thereto in the radial direction have the same width. Also, each of the belt reinforcing layers 72 is constituted by spirally winding a rubberized ribbon-shaped body containing few reinforcing elements 73 on the outside of the carcass 58 many times.

The widthwise outer ends 74 of the belt reinforcing layers 72a, 72b are located outward from the widthwise outer end 75 of the widest-width belt layer 65a in the widthwise direction. Thus, rubber in the vicinity of the widthwise outer end portions of the belt reinforcing layers 72a, 72b is far away from the widthwise outer end of the widest-width belt layer 65a largely deforming in the circumferential direction, so that it is hardly affected by such a deformation and hence strain of rubber located in the vicinity of the widthwise outer ends of the belt reinforcing layers 72a, 72b is decreased to effectively control separation failure. Moreover, numeral 76 is a cushion rubber layer interposed between the widthwise outer end portion of the belt reinforcing member 71 and the carcass 58.

Since a portion of the tread 55 indicating a greatest growth of tire size under an inflation of an internal pressure is usually located between a point R separated outward from an equatorial plane S of the tire by 0.325 times of L in the widthwise direction and a point P separated outward from the equatorial plane S by 0.375 times of L in the widthwise direction when a maximum width of the carcass 58 is L, it is preferable that the widthwise outer ends of the belt reinforcing layers 72a, 72b are located outward from the point P in the widthwise direction in order to strongly restrain the above growth of tire size to make uniform such a growth of tire size in the tread 55. However, when the widthwise outer ends 74 of the belt reinforcing layers 72a, 72b are located outward from a point Q separated outward from the equatorial plane S by 0.45 times of L in the widthwise direction, there is a fear of causing separation failure at the widthwise outer ends 74 of the belt reinforcing layers 72a. 72b, so that it is preferable that the widthwise outer ends 74 of the belt reinforcing layers 72a, 72b are located inward from the point Q in the widthwise direction. From this point, it is preferable that the widthwise outer ends 74 of the belt reinforcing layers 72a, 72b are located between the point P and the point Q.

When a full width of the widest-width belt layer 65a is N, it is preferable that the widthwise outer ends 74 of the belt reinforcing layers 72a, 72b are located outward from a point U separated by 0.05 times of N from the widthwise outer end 75 of the widest-width belt layer 65a in the widthwise direction. Thus, the widthwise outer ends 74 of the belt reinforcing layers 72a, 72b are far away from the widthwise outer end 75 of the widest-width belt layer 65a in the widthwise direction, so that rubber in the vicinity of the widthwise outer end 74 is hardly affected by the deformation of the widest-width belt layer 65a in the circumferential direction and hence separation failure at this position can more strongly be controlled.

Among belt layers 65 constituting the belt 64, a radially outermost belt layer or a narrow-width belt layer 65b in the illustrated embodiment bears a greater part of tension when an inclination angle of the cords 66 embedded in the belt layer 65b with respect to the equatorial plane S is less than 30° (22° in the illustrated embodiment), so that there may be broken the cords 66 in the belt layer 65b when an input from a protrusion is given to the tread 55 during the running of the tire. For this end, a belt protection member 79 comprised of at least one belt protection layer 78 is disposed on the outside of the narrow-width belt layer 65b in the radial direction in the illustrated embodiment for controlling the above breakage of the cords 66. In order to control the breakage of the cord 66, the belt protection member 79 is constructed so that an inclination angle of a reinforcing element embedded in the belt protection member is made equal to or more than the inclination angle of the cord in the belt layer 65 to decrease the tension bearing ofthe belt protection member itself. In this case, a plurality of inextensible reinforcing elements such as steel cords, aramid fiber cords or the like are embedded in the belt protection layer 78 constituting the belt protection member 79 so as to be inclined with respect to the equatorial plane S. Also, it is preferable that a width B of the belt protection member 79 is within a range of from 0.3 times of L to a width equal to that of the belt reinforcing layers 72a, 72b. When the width B of the belt protection member 79 is less than 0.3 times of L the belt protection member can not cover a high tension region of the belt 64, while when it exceeds the width of the belt reinforcing layer 72a, 72b, separation failure is caused at the widthwise outer end of the belt protection member 79.

The following examples are given in illustration of the invention and are not intended as limitations thereof.

### Example 1

There are provided a conventional tire 1 wherein a belt reinforcing member is disposed between a carcass and a belt and widthwise outer ends of belt reinforcing layers constituting the belt reinforcing member are located inward from a widthwise outer end of a widest-width belt layer in the belt in the widthwise direction, a conventional tire 2 wherein a belt reinforcing member is disposed on an outside of a belt in the radial direction and widthwise outer ends of belt reinforcing layers constituting the belt reinforcing member are located inward from a width wise outer end of a widest-width belt. layer in the belt in the widthwise direction, test tires 1 - 13 wherein a belt reinforcing member is disposed between a carcass and a belt and widthwise outer ends of belt reinforcing layers constituting the belt reinforcing member are located outward from a widthwise outer end of a widest-width belt layer in the belt in the widthwise direction.

Moreover, a belt protection member is arranged on an outside of the belt in the conventional tire 1, on an outside of the belt reinforcing member in the conventional tire 2, on an outside of the belt in the test tires 1 - 11, respectively.

Each of these tires has a tire size of 285/60R22.5.

In Table 1 are shown half-widths of two belt layers constituting the belt (half width of inner belt layer/half-width of outer belt layer, mm), inclination angles of cords in the two belt layers (inclination angle of cord in inner belt layer/inclination angle of cord in outer belt layer, degree), half-width of the belt reinforcing member (mm), F-value obtained by dividing a half-width of the belt reinforcing member by a maximum width of the carcass, G-value obtained by dividing a value of subtracting half-width of a widest-width belt layer from half-width of the belt reinforcing member by full width of the widest-width belt layer, and half-width of a belt protection member (mm).

Then, each of these tires is mounted onto a rim of 9.00 x 22.5 and inflated under an internal pressure of 9.0 kgf/cm² to measure a growth of tire size in a tread portion. Further, the tire is run on a drum at a speed of 60 km/h under a load of 5000 kg until the occurrence of separation failure at the widthwise outer end of the belt reinforcing member. The running distance is represented by an index on the basis that the conventional tire 1 is 100. The measured results are also shown in Table 1.

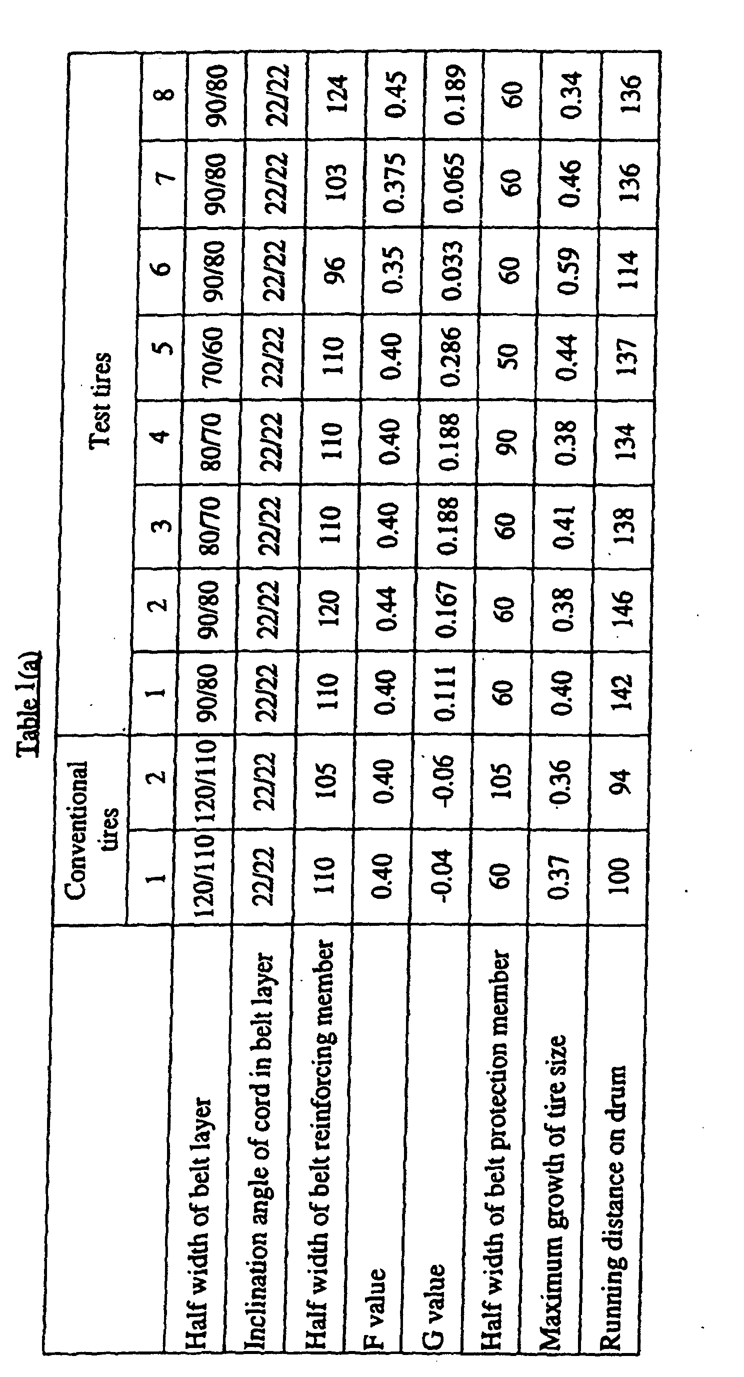

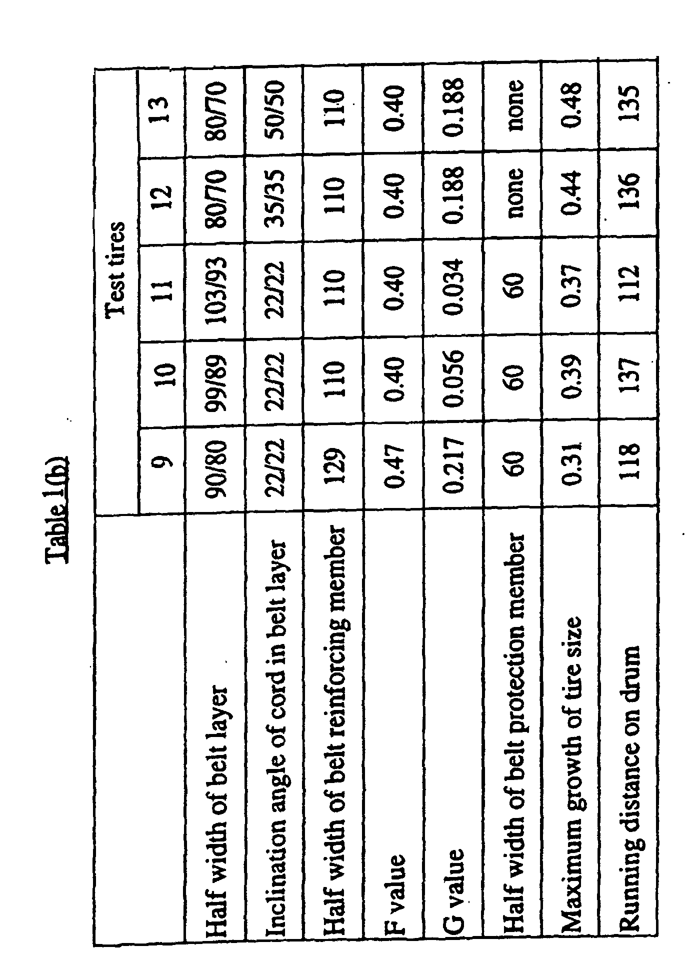

As mentioned above, according to the invention, the occurrence of separation failure due to deformation based on riding on a protrusion as well as the occurrence of separation failure in the vicinity of the widthwise outer end of the belt reinforcing member can effectively be prevented while controlling the outward growth of tire size in the tread portion.

## Claims

1. A pneumatic radial tire (51) comprising a carcass (58) toroidally extending between a pair of bead portions (53) and comprised of at least one rubberized ply (59) containing a plurality of cords (60) arranged substantially in a radial direction, a belt (64) arranged outside of the carcass in the radial direction and comprised of at least two belt layers (65a,65b) containing plural cords (66) embedded therein, the cords of which layers (65) being crossed with each other with respect to an equatorial plane (S) of the tire, a belt reinforcing member (71) arranged adjacent to the belt and inward therefrom in the radial direction and comprised of at least one belt reinforcing layer (72) containing a reinforcing element (73) embedded therein and extending in a circumferential direction while bending in wave or zigzag form, and a tread rubber (68) arranged outside of the belt in the radial direction, **characterized in that** the at least one belt reinforcing layer (72) is constituted by spirally winding a rubberized ribbon-shaped body containing few reinforcing elements therein many times, and the widthwise outer end (74) of the belt reinforcing layer (72) having the widest width among the belt reinforcing layers is located outward from the widthwise outer end (75) of the belt layer (65a) having the widest width in the widthwise direction of the tire.

2. A pneumatic tire as claimed in claim 1, **characterized in that** when a maximum width of the carcass (58) is L, the widthwise outer end (74) of the widest-width belt reinforcing layer (72) is located between a point P separated outward from the equatorial plane (S) by 0.375 times of L in the widthwise direction and a point Q separated outward from the equatorial plane by 0.45 times of L in the widthwise direction.

3. A pneumatic tire as claimed in claim 1 or 2, **characterized in that** when the width of the widest-width belt layer (65a) is N, the widthwise outer end (74) of the widest-width belt reinforcing layer (72) is located outward from a point U separated by 0.05 times ofN from the widthwise outer end (75) of the widest-width belt layer (65a) in the widthwise direction.

## Patentansprüche

1. Radialer Luftreifen (51), der aufweist: eine Karkasse (58), die sich ringförmig zwischen einem Paar Wulstabschnitten (53) erstreckt und mindestens eine gummierte Lage (59) aufweist, die eine Vielzahl von Korden (60) enthält, die im wesentlichen in einer radialen Richtung angeordnet sind; einen Gürtel (64), der außerhalb der Karkasse in der radialen Richtung angeordnet ist und mindestens zwei Gürtelschichten (65a, 65b) aufweist, die mehrere darin eingebettete Korde (66) enthalten, wobei die Korde der Schichten (65) miteinander mit Bezugnahme auf eine Äquatorialebene (S) des Reifens gekreuzt werden; ein Gürtelverstärkungselement (71), das angrenzend an den Gürtel und nach innen davon in der radialen Richtung angeordnet ist und mindestens eine Gürtelverstärkungsschicht (72) aufweist, die ein darin eingebettetes Verstärkungselement (73) enthält und sich in einer Umfangsrichtung erstreckt, während eine Biegung in einer Wellen- oder Zickzackform erfolgt; und einen Laufflächengummi (68), der außerhalb des Gürtels in der radialen Richtung angeordnet ist, **dadurch gekennzeichnet, daß** die mindestens eine Gürtelverstärkungsschicht (72) durch sprialförmiges Wickeln eines gummierten bandförmigen Körpers, der einige Verstärkungselemente darin enthält, mehrmals gebildet wird, und das äußere Ende (74) in der Breitenrichtung der Gürtelverstärkungsschicht (72), die die größte Breite unter den Gürtelverstärkungsschichten aufweist, nach außen vom äußeren Ende (75) in der Breitenrichtung der Gürtelschicht (65a) angeordnet wird, die die größte Breite in der Breitenrichtung des Reifens aufweist.

2. Luftreifen nach Anspruch 1, **dadurch gekennzeichnet, daß**, wenn eine maximale Breite der Karkasse (58) L beträgt, das äußere Ende (74) in der Breitenrichtung der Gürtelverstärkungsschicht (72) mit der größten Breite zwischen einem Punkt P, der nach außen von der Äquatorialebene (S) um das 0,375-fache von L in der Breitenrichtung getrennt ist, und einem Punkt Q angeordnet wird, der nach außen von der Äquatorialebene um das 0,45-fache von L in der Breitenrichtung getrennt ist.

3. Luftreifen nach Anspruch 1 oder 2, **dadurch gekennzeichnet, daß**, wenn die Breite der Gürtelschicht (65a) mit der größten Breite N beträgt, das äußere Ende (74) in der Breitenrichtung der Gürtelverstärkungsschicht (72) mit der größten Breite nach außen von einem Punkt U angeordnet wird, der um das 0,05-fache von N vom äußeren Ende (75) in der Breitenrichtung der Gürtelschicht (65a) mit der größten Breite in der Breitenrichtung getrennt ist.

## Revendications

1. Bandage pneumatique radial (51) comprenant une carcasse (58) s'étendant toroïdalement entre une paire de talons (53) et constituée d'au moins un pli caoutchouté (59) contenant une pluralité de cordes (60) agencées essentiellement dans la direction radiale, une ceinture (64) agencée à l'extérieur de la carcasse dans la direction radiale et constituée d'au moins deux nappes de ceinture (65a, 65b) contenant plusieurs cordes (66) enrobées dans celles-ci, nappes (65) dont les cordes sont croisées les unes avec les autres par rapport à un plan équatorial (S) du pneu, un élément de renforcement de ceinture (71) agencé de manière adjacente à la ceinture et vers l'intérieur à partir de celle-ci dans la direction radiale et constitué d'au moins une nappe de renforcement de ceinture (72) contenant un élément de renforcement (73) enrobé dans celle-ci et s'étendant dans la direction circonférentielle tout en se courbant sous tonne d'ondulation ou de zigzag, et un caoutchouc de bande de roulement (68) agencé à l'extérieur de la ceinture dans la direction radiale, **caractérisé en ce que** la au moins une nappe de renforcement de ceinture (72) est constituée en enroulant en spirale un grand nombre de fois un corps en forme de ruban caoutchouté contenant en son sein un petit nombre d'éléments de renforcement et l'extrémité extérieure dans le sens de la largeur (74) de la nappe de renforcement de ceinture (72) possédant la plus grande largeur parmi les nappes de renforcement de ceinture est située vers l'extérieur à partir de l'extrémité extérieure dans le sens de la largeur (75) de la nappe de ceinture (65a) possédant la plus grande largeur dans la direction de la largeur du pneu.

2. Bandage pneumatique comme revendiqué dans la revendication 1, **caractérisé en ce que** lorsque la largeur maximum de la carcasse (58) est L, l'extrémité extérieure dans le sens de la largeur (74) de la nappe de renforcement de ceinture de la plus grande largeur (72) est située entre un point P séparé vers l'extérieur à partir du plan équatorial (S) de 0,375 fois la distance L dans la direction de la largeur et un point Q séparé vers l'extérieur à partir du plan équatorial de 0,45 fois la distance L dans la direction de la largeur.

3. Bandage pneumatique comme revendiqué dans la revendication 1 ou 2, **caractérisé en ce que** lorsque la largeur de la nappe de ceinture de la plus grande largeur (65a) est N, l'extrémité extérieure dans le sens de la largeur (74) de la nappe de renforcement de ceinture de la plus grande largeur (72) est située vers l'extérieur à partir d'un point U séparé de 0,05 fois la distance N à partir de l'extrémité extérieure dans le sens de la largeur (75) de la nappe de ceinture de la plus grande largeur (65a) dans la direction de la largeur.
